Europäisches Patentamt

**European Patent Office** (11) Publication number: **0 350 975**

Office européen des brevets A1

## (12) EUROPEAN PATENT APPLICATION

(21) Application number: **89201426.7**

(22) Date of filing: **02.06.89**

(51) Int. Cl.⁴ **A61C 7/00**

(30) Priority: **13.07.88 NL 8801787**

(43) Date of publication of application:
**17.01.90 Bulletin 90/03**

(84) Designated Contracting States:
**AT BE CH DE ES FR GB GR IT LI LU NL SE**

(71) Applicant: **Reurink, Jan**
**Vijverweg 8 c**
**NL-2061 GW Bloemendaal(NL)**

(72) Inventor: **Reurink, Jan**
**Vijverweg 8 c**
**NL-2061 GW Bloemendaal(NL)**

(74) Representative: **de Vries, Johannes Hendrik**
**Fokke et al**
**Octrooibureau Los en Stigter B.V. P.O. Box**
**20052**
**NL-1000 HB Amsterdam(NL)**

(54) Bow assembly.

㉗ A bow assembly comprises a face bow (12) with an outer bow (5) and an inner bow (1), and two attaching means (2) for connecting the ends (3) of the inner bow with tooth-elements (4), in particular the molars of the upper jaw. Said attaching means each include a tube (7) attachable on a tooth-element (4) in which an end (3) of the inner bow can be slided. Each tube (7) is attachable on a tooth-element in a position substantially parallel to the longitudinal axis of the tooth-element and the ends of the inner bow extend substantially perpendicular to the main plane of the inner bow. The ends (3) of the inner bow (1) each are freely rotable with respect to the corresponding tube (7) when the ends of the inner bow are slided into the corresponding tubes.

fig.1

## Bow assembly

The invention relates to a bow assembly, comprising a face bow with an outer bow and an inner bow, and two attaching means for connecting the ends of the inner bow with tooth-elements, in particular the molars of the upper jaw, said attaching means each including a tube attachable on a tooth-element and in which an end of the inner bow can be slided, and to an attaching means and face bow for application in such a bow assembly.

Such a bow assembly has already been applied in orthodontics for 40 years for performing corrections of malposed teeth. In the known bow assembly the ends of the inner bow of the face bow are positioned in the main plane of the inner bow and the tubes of the attaching means extend substantially perpendicular to the longitudinal axis of the tooth-elements. It is known that the use of this bow assembly is subject to restrictions and presents disadvantages. One regularly occuring problem is for example that the upper molars, on which the attaching means have to be attached, are rotated, so that the tubes are positioned in such a manner, that the ends of the inner bow can only be slided with large difficulties into the tubes, so that large forces are exercised on these molars. Sometimes the application of the inner bow is even entirely impossible. In that case the position of the upper molars has to be corrected with supplementary orthodontic appliances, before the face bow can be used. Such an extra treatment causes relatively high cost.

By using the known face bow in a treatment of an "open bite" and a treatment for widening the maxillary dental arch such forces are exercised on the upper molars that these will be tipped outwardly or flaring, or will be going to protrude buccally. In order to avoid this undesired side-effect a palatal arch can be applied between the two upper molars, which is time-consuming and expensive.

The invention aims to provide a bow assembly of the type mentioned afore, in which the objections mentioned are overcome in a simple but still effective manner.

To this end the bow assembly according to the invention is characterized in that each tube is attachable on a tooth-element in a position substantially parallel to the longitudinal axis of the tooth-element and in that the ends of the inner bow extend substantially perpendicular to the main plane of the inner bow, wherein the ends of the inner bow each are freely rotable with respect to the corresponding tube when the ends of the inner bow are slided into the corresponding tubes.

In this manner a bow assembly is obtained, wherein the ends of the inner bow can always be slided into the tubes and wherein a correction of the molars in rotational direction is possible without using supplementary orthodontic appliances. In treatments for widening the maxillary dental arch or treatments of an open bite no tipping of the molars is possible, because the ends of the inner bow guarantee the correct axial position of the molars. Thereby no separate palatal arch is needed.

Because in a bow assembly according to the invention the ends of the inner bow extend no longer in the plane of the inner bow the chance of injury of the user is reduced considerably.

The invention will hereinafter be further explained with reference to the drawing, in which some embodiments of the bow assembly according to the invention are shown.

Fig. 1 shows a first embodiment of the bow assembly according to the inevntion in perspective, wherein the tooth-elements of the upper jaw are drawn schematically.

Fig. 2 shows an attaching means of the bow assembly shown in fig. 1 in perspective.

Fig. 3 shows an alternative embodiment of the attaching means together with an alternative end part of the inner bow according to the invention.

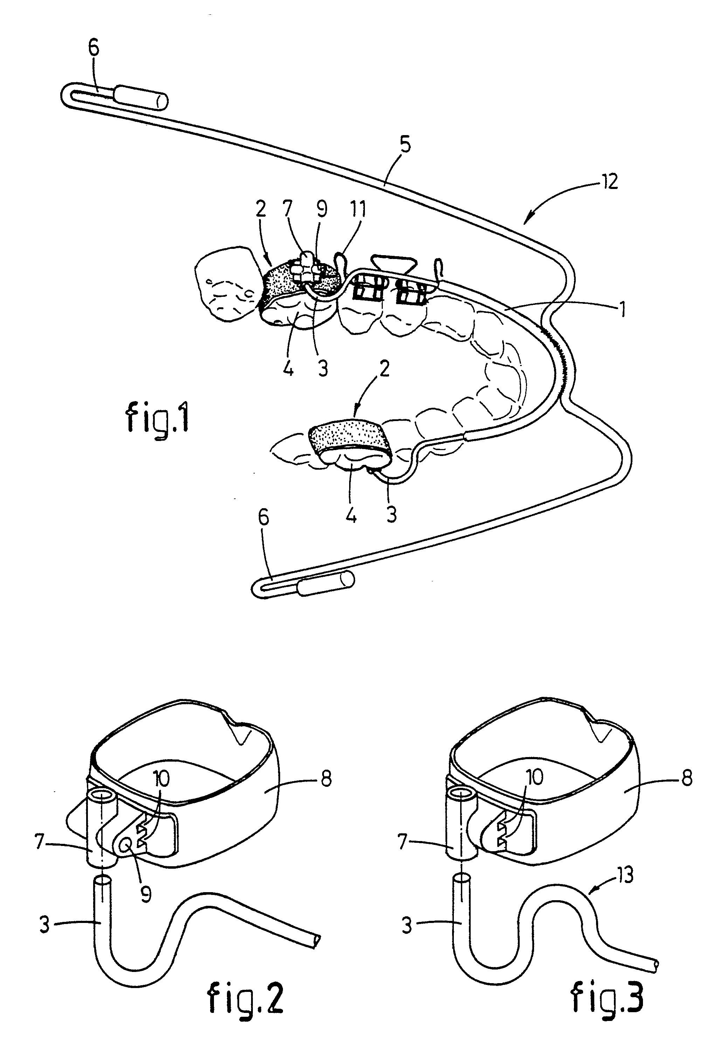

In figs. 1 and 2 a first embodiment of the bow assembly according to the invention is shown, which is provided with a face bow 12 comprising an inner bow 1 and an outer bow 5. Further the bow assembly includes two attaching means 2 for connecting the ends 3 of the inner bow 1 with the molars 4 of the upper jaw. The face bow 5 has ends 6 which are formed as hooks, to which an neck band or the like can be attached in an ordinary way for exercising the desired force on the molars 4.

The attaching means 2, of which one is shown in fig. 2 each include a tube 7, which is affixed on a closed band 8, with which the attaching means 2 is attached to the molar 4. The tube 7 extends at least substantially parallel to the center line of the band 8 and is in this manner attachable in a position substantially parallel to the longitudinal axis of the molar 4. The ends 3 of the inner bow 1, which in fig. 1 are slided into the tubes 7 (only one visible in fig. 1), extend at least substantially perpendicular to the main plane of the inner bow. When the ends 3 of the inner bow 1 are slid in the tubes 7, these ends 3 still are freely rotatable with respect to these tubes.

In the embodiment according to figs. 1 and 2 the attaching means 2 is further provided with a second tube 9, which extends at least substantially perpendicular to the tube 7. In this manner the attaching means 2 can also be used in the conventional face bow, of which the ends extend in the plane of the inner bow. In the embodiment shown in fig. 3 the attaching means 2 is solely provided with the tube 7.

Of course in both embodiments of the attaching means 2 channels 10 are provided wherein a bow thread 11, which is shown partially in fig.1, is attached.

As shown in fig. 3 the ends of the inner bow 1 may be provided with a S-shaped part 13, of which one of the ends joins the inner bow 1 and the other end forms the end 3 to be slid into the tube 7. By means of this S-shaped part 13 the size if the inner bow 1 can be easily adapted to the particular size of the dential arch of the patient.

The described bow assembly with the tubes extending substantially parallel to the longitudinal axis of the tooth-elements, or "vertical" tubes, 7 has important advantages. Independent of the position in rotational direction of the molars on which the attaching means have to be attached, the ends 3 of the inner bow 1 can be slided easily into the tubes 7. Therefore there is no longer any need for separate correction of the rotated position of the molars. Further carefully dosed forces can be exercised also in rotational direction on the molars 4 by means of the outer bow 1. In treatment for widening the maxillary dental arch or treatment of an open bite the ends 3 of the inner bow 1 fix the axial position of the molars 4, so that tilting or lopsiding outwards is no longer possible, so that for preventing this undesired side-effect no separate appliances are needed anymore. The ends 3 of the outer bow 1 protrude considerably less dangerous than in the common inner bow. Common treatments for obtaining mesially or distally tilting of the molars is also possible with the bow assembly according to the invention. By applying a bow thread 11 with sufficient width undesired rotation of the molars around the axis can be avoided.

The invention is not restricted to the embodiments described above, which can be varied in various ways within the scope of the appending claims.

Claims

1. Bow assembly, comprising a face bow with an outer bow and an inner bow, and two attaching means for connecting the ends of the inner bow with tooth-elements, in particular the molars of the upper jaw, said attaching means each including a tube attachable on a tooth-element and in which an end of the inner bow can be slided, characterized in that each tube is attachable on a tooth-element in a position substantially parallel to the longitudinal axis of the tooth-element and in that the ends of the inner bow extend substantially perpendicular to the main plane of the inner bow, wherein the ends of the inner bow each are freely rotable with respect to the corresponding tube when the ends of the inner bow are slided into the corresponding tubes.

2. Bow assembly according to claim 1, wherein each attaching means includes a closed band adapted to be disposed on a tooth-element, the tube being attached to said band, characterized in that the tube extends substantially parallel to the central axis of the band.

3. Bow assembly according to claim 1 or 2, characterized in that each attaching means further includes a second tube extending substantially perpendicular to said tube.

4. Bow assembly according to anyone of the preceding claims, characterized in the both ends of the inner bow are bent substantially S-shaped, wherein one end of the S-shape joins the inner bow and the other end is the said end of the inner bow.

5. Attaching means for application in the bow assembly according to anyone of the preceding claims.

6. Face bow for application in the bow assembly according to anyone of the preceding claims.

fig.1

fig.2

fig.3

# EUROPEAN SEARCH REPORT

Application Number

EP 89 20 1426

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | FR-A-2 357 232 (ARMSTRONG)<br>* Page 14, lines 35-38; figures 6,11 * | 1,2,5,6 | A 61 C 7/00 |
| Y | US-A-1 347 285 (MURLESS)<br>* Description; figures * | 1,2,5,6 | |
| A | US-A-4 212 637 (DOUGHERTY)<br>* Column 2, lines 22-31; figure 2 * | 1,3 | |
| A | FR-A-1 485 782 (MULLER)<br>* Figure 2 * | 4 | |

| | |
|---|---|
| | TECHNICAL FIELDS SEARCHED (Int. Cl.5) |
| | A 61 C |

The present search report has been drawn up for all claims

| Place of search | Date of completion of the search | Examiner |
|---|---|---|
| THE HAGUE | 29-09-1989 | VANRUNXT J.M.A. |